# EUROPÄISCHE PATENTSCHRIFT

(11) **EP 0 359 945 B1**
(45) Veröffentlichungstag und Bekanntmachung des Hinweises auf die Patenterteilung: **31.08.1994**
(21) Anmeldenummer: 89113750.7
(22) Anmeldetag: 26.07.1989
(51) Int. Cl.: F16L 55/033, B60T 17/00

(54) **Druckluft-Entlüftungseinrichtung**
Compressed-air expulsion system
Dispositif d'air comprimé et de ventilation

(30) Priorität: 21.09.1988 DE 3832029
(43) Veröffentlichungstag der Anmeldung: 28.03.1990
(60) Teilanmeldung: 93109340.5
(73) Patentinhaber: WABCO GmbH, 30453 Hannover (DE)
(72) Erfinder: Deike, Karl-Heinz, D-3017 Pattensen 5 (DE); Lippelt, Frank-Dietmar, D-3013 Barsinghausen 1 (DE); Kiel, Bernd-Joachim, D-3050 Wunstorf 1 (DE); Pohl, Wolfgang, D-3008 Garbsen 6 (DE); König, Heinz-Werner, D-3013 Barsinghausen 8 (DE)
(74) Vertreter: Schrödter, Manfred, Dipl.-Ing.

(56) Entgegenhaltungen:
- EP-A- 0 019 855
- DE-A- 1 801 447
- DE-A- 3 343 587
- FR-A- 2 451 530

## Beschreibung

Die Erfindung betrifft eine Druckluft-Entlüftungseinrichtung gemäß dem Oberbegriff des Patentanspruchs 1.

Eine derartige Druckluft-Entlüftungseinrichtung ist aus der EP 0 019 855 bekannt.

Bei einer Druckluft-Entlüftungseinrichtung ist es nicht auszuschließen, daß nach längerer Betriebszeit die Druckluft-Durchlässigkeit der geräuschdämpfenden Mittel im Gehäuseinnenraum der Druckluft-Entlüftungseinrichtung nachläßt, z.B. durch gefrierendes Kondensat oder durch Ablagerung von Ölkohle.
Dies kann zur Folge haben, daß sich im Gehäuseinnenraum ein unerwünschter Staudruck bildet.

Der Erfindung liegt deshalb die Aufgabe zugrunde, eine Druckluft-Entlüftungseinrichtung der eingangs erwähnten Art so auszubilden, daß eine übermäßige Staudruckbildung verhindert wird.

Diese Aufgabe wird durch die im Patentanspruch 1 angegebene Erfindung gelöst.
Weiterbildungen und vorteilhafte Ausgestaltungen der Erfindung sind in den Unteransprüchen aufgezeigt.

Die Erfindung bietet insbesondere den Vorteil, daß durch die Anordnung einer als Überdruckventil ausgebildeten Überdrucksicherung zwischen dem den geräuschdämpfenden Mitteln vorgeschalteten Entlüftungsraum und dem den geräuschdämpfenden Mitteln nachgeschalteten Entspannungsraum der Druckluft-Entlüftungseinrichtung bei Überschreiten eines vorbestimmbaren maximalen Staudruckwertes im Entlüftungsraum der Staudruck über das Überdruckventil abgebaut wird. Eine nennenswerte Beeinträchtigung der Funktion der der Druckluft-Entlüftungseinrichtung vorgeschalteten Geräte oder gar eine Zerstörung dieser Geräte wird vermieden. Eine nach Art eines Überströmventils wirkende Überdrucksicherungseinrichtung kann auch in der Gehäusewand der Druckluft-Entlüftungseinrichtung vorgesehen werden, so daß der Staudruck direkt zur Atmosphäre hin abgebaut wird.

Wird zwischen den beiden besagten Räumen ein als ein in Richtung auf den den geräuschdämpfenden Mittel nachgeschalteten Entspannungsraum zu in die Offenstellung bringbares Überdruckventil vorgesehen, so bleibt die Druckluft-Entlüftungseinrichtung auch dann noch funktionsfähig, wenn die geräuschdämpfenden Mittel teilweise zugesetzt sind.

In der DE-A-1 801 447 wird ein Geräuschdämpfer gezeigt und beschrieben, der eine mit einer Einlaßöffnung versehene Einlaßkammer, eine mit einer Auslaßöffnung versehene Auslaßkammer und eine durch zwei Wände von diesen Kammern getrennte Mittelkammer aufweist. Die Einlaßkammer ist über ein erstes Rohr mit der Mittelkammer verbunden, die Auslaßkammer steht über ein zweites Rohr ebenfalls mit der Mittelkammer in Verbindung und über ein drittes Rohr ist die Einlaßkammer direkt mit der Auslaßkammer verbunden.

Von der Einlaßkammer kann Druckluft über das dritte Rohr unter Umgehung der Mittelkammer somit direkt zur Auslaßkammer gelangen.

Das Problem einer möglichen übermäßigen Staudruckbildung ist bei dieser Ausbildung eines Geräuschdämpfers jedoch nicht gelöst, da die Einlaßöffnung auf ihrer der Einlaßkammer zugewandten Seite von einer fingerhutförmigen Vorrichtung abgeschlossen wird, die sich in die Einlaßkammer hineinerstreckt. Eine der Einlaßöffnung gegenüberliegende Endwand dieser Vorrichtung dient als Prallplatte für die in den Geräuschdämpfer einströmende Druckluft. Der Druckluftstrom wird in der Vorrichtung zerteilt und gelangt durch eine Vielzahl von in der seitlichen Wand angeordnete kleine Durchlaßöffnungen in die Einlaßkammer des Geräuschdämpfers.

Wenn diese Durchlaßöffnungen sich zusetzen, z. B. durch gefrierendes Kondensat oder durch Ölkohle, läßt sich eine Staudruckbildung und somit eine Schädigung des dem Geräuschdämpfer vorgeschalteten Gerätes nicht vermeiden.

Aus der DE-A-3 343 587 ist ein Geräuschdämpfer mit zwei Einlaßöffnungen und einer Auslaßöffnung bekannt. Zwischen den Einlaßöffnungen und der Auslaßöffnung ist geräuschdämpfendes Material vorgesehen, das einen Teil des Innenraumes des Geräuschdämpfergehäuses ausfüllt.

Wenn sich bei diesem bekannten Geräuschdämpfer das geräuschdämpfende Material zusetzt, läßt sich eine übermäßige Staudruckbildung, die zu einer Zerstörung des Geräuschdämpfers oder zu einer Schädigung von dem Geräuschdämpfer vorgeschalteten Geräten führen kann, nicht vermeiden, da bei diesem Geräuschdämpfer keine Mittel vorgesehen sind, welche eine Umgehung des geräuschdämpfenden Materials für die Druckluft ermöglichen. Der einzige Weg für die Druckluft führt von den Einlaßöffnungen durch das geräuschdämpfende Material zur Auslaßöffnung.

Anhand der Zeichnung werden nachfolgend zwei Ausführungsbeispiele der Erfindung näher erläutert.

Es zeigen:
- Fig. 1: eine als Geräuschdämpfer ausgebildete Druckluft-Entlüftungseinrichtung mit einer Einlaßkammer und einer Auslaßkammer, wobei in dem Bereich der Gehäusewand des Geräuschdämpfers, welche die Einlaßkammer begrenzt, ein Überdruckventil vorgesehen ist;
- Fig.2: einen Geräuschdämpfer mit einer als Sollbruchstelle ausgebildeten Überdrucksicherung in der die Einlaßkammer begrenzenden Wand und einem in der die Expansionskammer von der Auslaßkammer trennenden Wand des Geräuschdämpfers vorgesehenen Überdruckventil.

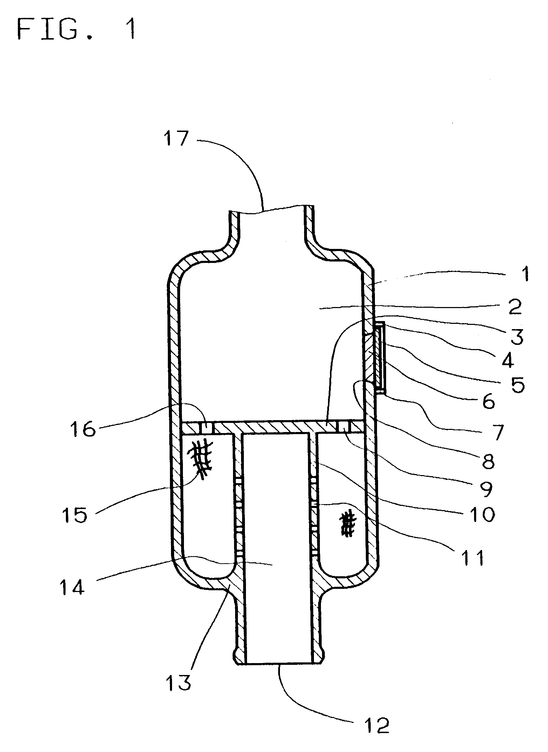

In Fig.1 ist ein als Druckluft-Entlüftungseinrichtung dienender Geräuschdämpfer dargestellt, der ein Gehäuse (1) mit einer Einlaßöffnung (17) und einer Auslaßöffnung (12) für Druckluft aufweist. Der Geräuschdämpfer ist mit seiner Einlaßöffnung z.B. mit dem Auslaß eines Druckregelventils verbunden, welches zwischen einem Kompressor und einem Druckluftvorratsbehälter angeordnet ist.

Im Gehäuse (1) des Geräuschdämpfers sind geräuschdämpfende Mittel vorgesehen, welche den Innenraum des Gehäuses (1) in einen den geräuschdämpfenden Mitteln vorgeschalteten zu entlüftenden Entlüftungsraum und einen den geräuschdämpfenden Mitteln nachgeschalteten Entspannungsraum unterteilen.

Die geräuschdämpfenden Mittel bestehen in diesem Ausführungsbeispiel aus einem ringförmig ausgebildeten Drahtgewebekörper (15), der ein in Richtung der Längsachse des Gehäuses (1) verlaufendes Rohr (10) umgibt. Die Wand des Rohres (10) ist in dem vom Drahtgewebekörper (15) umgebenen Bereich mit einer Vielzahl von Durchlässen (11) versehen.
Das Rohr ist mit seinem einen Ende an einer Platte (3) druckdicht befestigt, die in dem den geräuschdämpfenden Mitteln vorgeschalteten Entlüftungsraum quer zur Längsachse des Gehäuses (1) verlaufend an der Gehäuseinnenwand befestigt ist.

Die Platte (3) weist außerhalb des vonm Rohr (10) umgebenen Bereiches Durchlässe (9, 16) auf, über welche der als Einlaßkammer (2) dienende, den geräuschdämpfenden Mitteln vorgeschaltet Entlüftungsraum ständig mit den geräuschdämpfenden Mitteln verbunden ist.

Das Rohr (10) mündet mit seinem der Platte (3) abgewandten Ende, die Auslaßöffnung (12) umgebend an einem Bodenteil (13) des Gehäuses (1). Der vom Rohr (10) begrenzte Raum ist der den geräuschdämpfenden Mitteln nachgeschaltete Entspannungsraum und dient in diesem Ausführungsbeispiel als Auslaßkammer (14) für die Druckluft.

In dem die Einlaßkammer (2) begrenzenden Bereich der Wand des Gehäuses (1) ist eine Durchlaßöffnung (8) angeordnet, die von einem in diese eingesetzten, als Verschlußglied (6) dienenden Stopfen verschlossen wird. Die Durchlaßöffnung (8) und das Verschlußglied (6) sind vorzugsweise in Richtung auf die Einlaßkammer (2) zu sich konisch verjüngend ausgebildet.

Eine auf der äußeren Mantelfläche des Gehäuses (1) aufliegende und die Durchlaßöffnung (8) überdeckende Platte (5), die vorzugsweise aus einem elastischen Werkstoff besteht, hält das Verschlußglied (6) in der Durchlaßöffnung (8).
Die Platte (6) kann als Typenschild für den Geräuschdämpfer ausgebildet sein. Sie kann einstückig mit dem Verschlußglied (6) ausgebildet sein.
Die Platte (6) wird von zwei rahmenartigen Teilen (4) und (7), die an die Mantelfläche des Gehäuses (1) angeformt sind, gehalten. Das Verschlußglied (6) und die Durchlaßöffnung (8) haben die Funktion eines Überdruckventils, über welches der Entlüftungsraum mit der Atmosphäre verbindbar ist.

Die Funktion des im vorstehenden beschriebenen Geräuschdämpfers wird nachfolgend näher erläutert.

Beim Abblasen der überschüssigen Druckluft aus dem den Geräuschdämpfer vorgeschalteten Druckregelventil gelangt die Druckluft in die Einlaßkammer (2) des Geräuschdämpfers. Von der Einlaßkammer (2) strömt die Druckluft durch die in der Platte (3) vorgesehenen Durchlässe (9, 16) in den den Drahtgewebekörper (15) enthaltenden Raum und gelangt durch das Drahtgewebe sowie die im Rohr (10) vorgesehenen Durchlässe in die Auslaßkammer (14). Von der Auslaßkammer (14) strömt die Druckluft durch die Auslaßöffnung (12) zur Atmosphäre hin.

Setzt sich der Drahtgewebekörper (14), z.B. durch Ablagerung von Ölkohle oder durch vereistes Kondensat, zu, so baut sich in der Einlaßkammer (2) ein Staudruck auf.
Sobald der Staudruck eine vorbestimmte maximal zulässige Höhe überschritten hat, wird das Verschlußglied (6) vom Staudruck im Entlüftungsraum (Einlaßkammer 2) aus der in der Gehäusewand vorgesehenen Durchlaßöffnung (8) herausgedrückt.
Bei diesem Vorgang verformt sich die elastische Platte (5) so weit, daß sie ebenfalls aus ihren rahmenartigen Halteteilen (4 und 7) herausgedrückt wird.

Durch die jetzt freigegebene Durchlaßöffnung (8) in der Wand des Gehäuses (1) baut sich der Staudruck in der Einlaßkammer (2) zur Atmosphäre hin ab.
Um ein Verlustiggehen der elastischen Platte (5) bei diesem Vorgang zu verhindern, kann die elastische Platte (5) einseitig an der Wand des Gehäuses befestigt sein.

In gleicher Weise arbeitet die in der Wand des Gehäuses (1) vorgesehene Überdrucksicherungseinrichtung (8, 5, 6, 4, 7) auch, wenn die Platte (3) als Lochblech ausgebildet ist und sich die Öffnungen des Lochbleches zusetzen, so daß in der Einlaßkammer (2) ein zu hoher Staudruck entsteht.

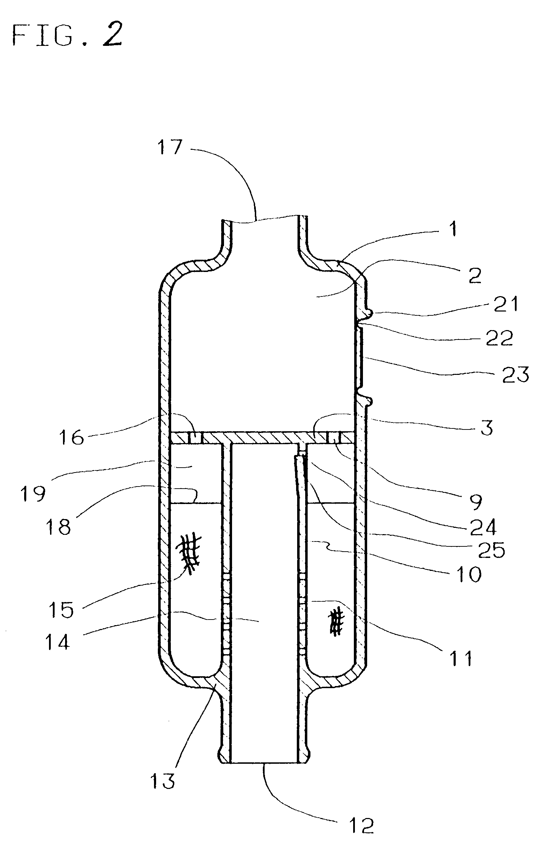

Der in Fig.2 gezeigte Geräuschdämpfer weist im wesentlichen den gleichen Aufbau auf wie der in Fig.1 dargestellte Geräuschdämpfers.
In der Wand des Rohres (10) ist jedoch eine Öffnung (24) vorgesehen, die von einer elastischen Lasche (25 verschlossen wird. Die Öffnung (24) und die Lasche (25) bilden ein Überdruckventil. Die in der Wand des Gehäuses (1) vorgesehene Überdrucksicherungseinrichtung ist gemäß dem Ausführungsbeispiel nach Fig.2 als Sollbruchstelle ausgebildet.

Die Sollbruchstelle besteht aus einem vorzugsweise kreisrunden Wandungsteil (23), welches vorzugsweise dünner ausgebildet ist als die übrige Wand des Gehäuses (1).
Das dünnere Wandungsteil (23) wird von einer Wulst (21) gehalten, wobei das eine Ende (21) der Wulst mit der Wand des Gehäuses (1) und das andere Ende (22) der Wulst, welches dünner ausgebildet ist als die Wand (1) und so die eigentliche Sollbruchstelle bildet, mit dem dünneren Wandungsteil (23) verbunden ist.

Das von der Wulst gehaltene Wandungsteil (23) kann auch die gleiche Stärke aufweisen wie die Gehäusewand (1). Jedoch muß in einem solchen Fall der Übergangsbereich zwischen Wulst (21) und Wandungsteil (23) dünner ausgebildet sein als die Wand des Gehäuses (1), um einen genau definierten Bruchverlauf zu erhalten.

Als Überdrucksicherungseinrichtung bzw, als Überdruckventil kann selbstverständlich auch ein einfaches Rückschlagventil Verwendung finden welches aus einer Öffnung und einer Rückschlagklappe besteht.
Ein solches Rückschlagventil kann in der Wand des Gehäuses (1) oder auch in der Wand des Rohres (10) angeordnet sein. Anstelle eines Stopfens (6) kann eine die Durchlaßöffnung (8) verschließende Kugel vorgesehen werden.

Es ist selbstverständlich auch möglich, das Überdruckventil an oder in einem Bauteil anzuordnen, welches den den geräuschdämpfenden Mitteln vorgeschalteten Entlüftungsraum von dem den geräuschdämpfenden Mitteln nachgeschalteten Entspannungsraum trennt.

In Anlehnung an die Ausführungsbeispiels gemäß den Figuren 1 und 2 kann das Überdruckventil anstatt in der Wand des Gehäuses (1) in der Platte (3) vorgesehen werden. Das Überdruckventil ist in einem solchen Fall in dem Bereich der Platte (3) anzuordnen, der von dem freien Innenraum des Rohres (10) begrenzt wird.

Als zu entlüftender Entlüftungsraum ist jeder Raum, wie z.B. die Expansionskammer, die Einlaßkammer, der Einlaßstutzen anzusehen. D.h. jeder Raum, der den geräuschdämpfenden Mitteln vorgeschaltet ist, hat die Funktion eines Entlüftungsraumes, und zwar unabhängig davon, ob er in einem Gehäuse, wie in den Ausführungsbeispielen der Erfindung dargestellt, oder in einem Teil eines Gerätes gelegen ist, in oder an welchen die geräuschdämpfenden Mittel angeordnet sind.

Ist ein den geräuschdämpfenden Mitteln nachgeschalteter Entspannungsraum vorgesehen, so kann dieser auch direkt von der diesem Entspannungsraum zugewandten Seite der geräuschdämpfenden Mittel begrenzt werden. Eine Wand, wie in den Ausführungsbeispielen dargestellt, die Wand des Rohres (10), ist nicht erforderlich.
Die Überdruckbegrenzungseinrichtung, vorstehend als Überdruckventil bezeichnet, braucht natürlich nicht die typischen Merkmale eines Ventils zu enthalten, wie Ventilsitz und Ventilkörper. Sie kann, wie bereits beschrieben, als Sollbruchstelle in einer Wand (auch in der Wand eines Rohres) oder als Berstlasche ausgebildet sein. Die Berstlasche ist eine die Öffnung in einer Wand verschließende Lasche, die Bestandteil dieser Wand ist, und bei Überdruck in einem an diese Wand angrenzenden Raum mehr oder weniger weit aus der Öffnung herausgedrückt wird. Nach Abfall des Überdruckes kehrt die Lasche in ihre Ausgangsstellung zurück.
Das Überdruckventil kann in jedem Teilbereich einer den Entlüftungsraum begrenzenden Wand angeordnet sein (der die Einlaßkammer oder die Expansionskammer begrenzende Teilbereich der Wand des Gehäuses 1 oder eines Wandungsteils eines Gerätes oder auch ein den Anschlußstutzen begrenzendes Wandungsteil).

## Patentansprüche

1. Druckluft-Entlüftungseinrichtung mit geräuschdämpfenden Mitteln (15) und einem den geräuschdämpfenden Mitteln (15) vorgeschalteten zu entlüftenden Entlüftungsraum (2, 19),
dadurch gekennzeichnet, daß die Druckluft-Entlüftungseinrichtung ein Überdruckventil (8, 6 bzw. 22, 23) aufweist, über welches der Entlüftungsraum (2, 19) mit der Atmosphäre und/oder mit einem den geräuschdämpfenden Mitteln (15) gegebenenfalls nachgeschalteten Entspannungsraum (14) verbindbar ist.

2. Druckluft-Entlüftungseinrichtung nach Anspruch 1 , gekennzeichnet durch die folgenden Merkmale:
a) Die geräuschdämpfenden Mittel (15) sind in einem Gehäuse (1) angeordnet;
b) den geräuschdämpfenden Mitteln (15) ist ein zu entlüftender Entlüftungsraum (2, 19) vorgeschaltet.

3. Druckluft-Entlüftungseinrichtung nach wenigstens einem der vorhergehenden Ansprüche, gekennzeichnet durch die folgenden Merkmale:
a) Die geräuschdämpfenden Mittel (15) sind in einem Gehäuse (1) angeordnet;
b) den geräuschdämpfenden Mitteln (15) ist ein zu entlüftender Entlüftungsraum (2, 19) vorgeschaltet;
c) den geräuschdämpfenden Mitteln ist ein Entspannungsraum (14) nachgeschaltet.

4. Druckluft-Entlüftungseinrichtung nach wenigstens einem der vorhergehenden Ansprüche, dadurch gekennzeichnet, daß der Entlüftungsraum (2, 19) durch eine Wand (3) in eine Einlaßkammer (2) und in eine Expansionskammer (19) unterteilt ist, wobei die Einlaßkammer (2) und die Expansionskammer (19) über wenigstens eine in der Wand (3) vorgesehene Öffnung (9, 16) miteinander verbunden sind.

5. Druckluft-Entlüftungseinrichtung nach wenigstens einem der vorhergehenden Ansprüche, dadurch gekennzeichnet, daß die Einlaßkammer (2) und der Entspannungsraum (14) über das Überdruckventil miteinander verbindbar sind.

6. Druckluft-Entlüftungseinrichtung nach wenigstens einem der vorhergehenden Ansprüche, dadurch gekennzeichnet, daß die Expansionskammer (19) und der Entspannungsraum (14) über das Überdruckventil miteinander verbindbar sind.

7. Druckluft-Entlüftungseinrichtung nach wenigstens einem der vorhergehenden Ansprüche, dadurch gekennzeichnet, daß das Überdruckventil (8, 6) in der den Entlüftungsraum (2, 19) begrenzenden Wand des Gehäuses (1) angeordnet ist, derart, daß es zur Atmosphäre hin in die Offenstellung bringbar ist.

8. Druckluft-Entlüftungseinrichtung nach wenigstens einem der vorhergehenden Ansprüche, dadurch gekennzeichnet, daß das Überdruckventil (8, 6) in den Bereich der Wand des Gehäuses (1) angeordnet ist, welcher die Einlaßkammer (2) begrenzt.

9. Druckluft-Entlüftungseinrichtung nach Anspruch 4, dadurch gekennzeichnet, daß das Überdruckventil in dem Bereich der Wand des Gehäuses (1) angeordnet ist, welcher die Expansionskammer (19) begrenzt.

10. Druckluft-Entlüftungseinrichtung nach wenigstens einem der vorhergehenden Ansprüche, dadurch gekennzeichnet, daß das Überdruckventil aus einer in der Wand des Gehäuses (1) vorgesehenen Öffnung (8), welche von einem Verschlußteil (6) verschlossen ist, gebildet ist.

11. Druckluft-Entlüftungseinrichtung nach Anspruch 10, dadurch gekennzeichnet, daß die Öffnung (8) und das Verschlußteil (6) von einer Platte (5) überdeckt werden, welche auf der Mantelfläche des Gehäuses (1) aufliegt und von Halteteilen (4 und 7) gehalten wird.

12. Druckluft-Entlüftungseinrichtung nach Anspruch 11, dadurch gekennzeichnet, daß die Platte (5) aus einem elastischen Werkstoff besteht.

13. Druckluft-Entlüftungseinrichtung nach Anspruch 10, dadurch gekennzeichnet, daß das Verschlußteil (6) als Stopfen ausgebildet ist.

14. Druckluft-Entlüftungseinrichtung nach Anspruch 10, dadurch gekennzeichnet, daß das Verschlußteil (6) als Kugel ausgebildet ist.

15. Druckluft-Entlüftungseinrichtung nach wenigstens einem der vorhergehenden Ansprüche 1,5,6,7,8,9, dadurch gekennzeichnet, daß das Überdruckventil als eine in der Wand des Gehäuses (1) angeordnete Sollbruchstelle (21, 22, 23) ausgebildet ist.

16. Druckluft-Entlüftungseinrichtung nach Anspruch 15, dadurch gekennzeichnet, daß die Sollbruchstelle aus einem gegenüber der Wand des Gehäuses (1) dünneren Wandungsteil (22, 23) besteht, welches von einer Wulst (21) gehalten wird, wobei die eine Seite (21) der Wulst an der Wand des Gehäuses (1) vorgesehen ist und die andere Seite der Wulst mit dem dünneren Wandungsteil (22, 23) verbunden ist.

17. Druckluft-Entlüftungseinrichtung nach Anspruch 15, dadurch gekennzeichnet, daß die Sollbruchstelle in einer die Expansionskammer (19) von dem Entspannungsraum (14) trennenden Wand (10) angeordnet ist.

18. Druckluft-Entlüftungseinrichtung nach Anspruch 17, dadurch gekennzeichnet, daß die Sollbruchstelle in einer die Expansionskammer (19) von dem Entspannungsraum (14) trennenden Wand (10) angeordnet ist, wobei die Sollbruchstelle aus einem gegenüber der Wand (10) dünneren Wandungsteil besteht, welches von einer Wulst gehalten wird, wobei die eine Seite der Wulst an der Wand (10) vorgesehen ist und die andere Seite der Wulst mit dem dünneren Wandungsteil verbunden ist.

19. Druckluft-Entlüftungseinrichtung nach wenigstens einem der vorhergehenden Ansprüche 1,5,6,7,8,9,10, dadurch gekennzeichnet, daß das Überdruckventil von einer in der Wand (1) bzw. (10) vorgesehenen Öffnung (24) und einer die Öffnung (24) verschließenden Lasche (25) gebildet wird.

## Claims

1. A compressed air venting device with noise-suppressing means (15) and a venting chamber (2, 19) to be vented which is connected upstream of the noise-suppressing means (15), characterized in that the compressed air venting device comprises a pressure relief valve (8, 6 and 22, 23, respectively) by means of which the venting chamber (2, 19) is arranged to be connected to the atmosphere and/or to a relief chamber (14) optionally connected downstream of the noise-suppressing means (15).

2. A compressed air venting device according to claim 1, characterized by the following features:
a) the noise-suppressing means (15) are arranged in a housing (1);
b) a venting chamber (2, 19) to be vented is connected upstream of the noise-suppressing means (15).

3. A compressed air venting device according to at least one of the preceding claims, characterized by the following features:
a) the noise-suppressing means (15) are arranged in a housing (1);
b) a venting chamber (2, 19) to be vented is connected upstream of the noise-suppressing means (15);
c) a relief chamber (14) is connected downstream of the noise-suppressing means.

4. A compressed air venting device according to at least one of the preceding claims, characterized in that the venting chamber (2, 19) is divided by a wall (3) into an inlet chamber (2) and an expansion chamber (19), the inlet chamber (2) and the expansion chamber (19) being connected to one another by at least one opening (9, 16) in the wall (3).

5. A compressed air venting device according to at least one of the preceding claims, characterized in that the inlet chamber (2) and the relief chamber (14) are arranged to be connected to one another by way of the pressure relief valve.

6. A compressed air venting device according to at least one of the preceding claims, characterized in that the expansion chamber (19) and the relief chamber (14) are arranged to be connected to one another by way of the pressure relief valve.

7. A compressed air venting device according to at least one of the preceding claims, characterized in that the pressure relief valve (8, 6) is arranged in the wall of the housing (1) bounding the venting chamber (2, 19) so that it can be brought into the open position leading towards the atmosphere.

8. A compressed air venting device according to at least one of the preceding claims, characterized in that the pressure relief valve (8, 6) is arranged in the region of the wall of the housing (1) which bounds the inlet chamber (2).

9. A compressed air venting device according to claim 4, characterized in that the pressure relief valve is arranged in the region of the wall of the housing (1) which bounds the expansion chamber (19).

10. A compressed air venting device according to at least one of the preceding claims, characterized in that the pressure relief valve is formed by an opening (8) provided in the wall of the housing (1) which is closed by a closure member (6).

11. A compressed air venting device according to claim 10, characterized in that the opening (8) and the closure member (6) are covered by a plate (5) which lies on the outer surface of the housing (1) and is held by frame parts (4 and 7).

12. A compressed air venting device according to claim 11, characterized in that the plate (5) consists of a resilient material.

13. A compressed air venting device according to claim 10, characterized in that the closure member (6) is constructed as a stopper.

14. A compressed air venting device according to claim 10, characterized in that the closure member (6) is constructed as a ball.

15. A compressed air venting device according to at least one of the preceding claims 1, 5, 6, 7, 8, 9, characterized in that the pressure relief valve is constructed as a rupture place (21, 22, 23) arranged in the wall of the housing (1).

16. A compressed air venting device according to claim 15, characterized in that the rupture place consists of a wall part (22, 23) thinner than the wall of the housing (1), which is held by an enlargement (21), one side (21) of the enlargement being provided on the wall of the housing (1) and the other side of the enlargement being joined to the thinner wall part (22, 23).

17. A compressed air venting device according to claim 15, characterized in that the rupture place is arranged in a wall (10) separating the expansion chamber (19) from the relief chamber (14).

18. A compressed air venting device according to claim 17, characterized in that the rupture place is arranged in a wall (10) separating the expansion chamber (19) from the relief chamber (14), the rupture place comprising a wall part that is thinner than the wall (10) and is held by an enlargement, one side of the enlargement being provided on the wall (10) and the other side of the enlargement being joined to the thinner wall part.

19. A compressed air venting device according to at least one of the preceding claims 1, 5, 6, 7, 8, 9, 10, characterized in that the pressure relief valve is formed by an opening (24) provided in the wall (1) and (10) and a flap (25) closing the opening (24).

## Revendications

1. Dispositif de mise à l'échappement d'air comprimé, comprenant des moyens d'insonorisation (15) et un espace de mise à l'échappement (2, 19), prévu en amont des moyens d'insonorisation (15) et qui doit être mis à l'échappement, caractérisé en ce que le dispositif de mise à l'échappement d'air comprimé comporte une soupape de surpression (8, 6 ou 22, 23) à travers de laquelle l'espace de mise à l'échappement (2, 19) peut être relié à l'atmosphère et/ou à un espace de détente (14) éventuellement prévu en aval des moyens d'insonorisation (15).

2. Dispositif de mise à l'échappement d'air comprimé selon la revendication 1, caractérisé en ce que:
a) les moyens d'insonorisation (15) sont disposé dans un corps (1); et
b) les moyens d'insonorisation (15) sont précédés d'un espace de mise à l'échappement (2, 19) devant être mis à l'échappement.

3. Dispositif de mise à l'échappement d'air comprimé selon au moins l'une des revendications précédentes, caractérisé en ce que:
a) les moyens d'insonorisation (15) sont disposés dans un corps (1);
b) les moyens d'insonorisation (15) sont précédés d'un espace de mise à l'échappement (2, 19) qui doit être mis à l'échappement; et
c) les moyens d'insonorisation sont suivis d'un espace de détente (14).

4. Dispositif de mise à l'échappement d'air comprimé selon au moins l'une des revendications précédentes, caractérisé en ce que l'espace de mise à l'échappement (2, 19) est divisé par une paroi (3) en une chambre d'admission (2) et une chambre d'expansion (19), la chambre d'admission (2) et la chambre d'expansion (19) étant reliées entre elles à travers au moins une ouverture (9, 16) prévue dans la paroi (3).

5. Dispositif de mise à l'échappement d'air comprimé selon au moins l'une des revendications précédentes, caractérisé en ce que la chambre d'admission (2) et l'espace de détente (14) peuvent être reliés entre eux à travers la soupape de surpression.

6. Dispositif de mise à l'échappement d'air comprimé selon au moins l'une des revendications précédentes, caractérisé en ce que la chambre d'expansion (19) et l'espace de détente (14) peuvent être reliés entre eux à travers la soupape de surpression.

7. Dispositif de mise à lréchappement d'air comprimé selon au moins l'une des revendications précédentes, caractérisé en ce que la soupape de supression (8, 6) est disposée dans la paroi du corps (1) délimitant l'espace de mise à l'échappement (2, 19), de manière qu'elle puisse être amenée à la position ouverte vers l'atmosphère.

8. Dispositif de mise à l'échappement d'air comprimé selon au moins l'une des revendications précédentes, caractérisé en ce que la soupape de surpression (8, 6) est disposée dans la partie de la paroi du corps (1) qui délimite la chambre d'admission (2).

9. Dispositif de mise à l'échappement d'air comprimé selon la revendication 4, caractérisé en ce que la soupape de surpression est disposée dans la partie de la paroi du corps (1) qui délimite la chambre d'expansion (19).

10. Dispositif de mise à l'échappement d'air comprimé selon au moins l'une des revendications précédentes, caractérisé en ce que la soupape de surpression est formée par une ouverture (8) prévue dans la paroi du corps (1) et fermée par une partie d'obturation (6).

11. Dispositif de mise à l'échappement d'air comprimé selon la revendication 10, caractérisé en ce que l'ouverture (8) et la partie d'obturation (6) sont recouvertes par une plaquette (5) appuyée sur la surface latérale du corps (1) et maintenue par des parties de maintien (4 et 7).

12. Dispositif de mise à l'échappement d'air comprimé selon la revendication 11, caractérisé en ce que la plaquette (5) est faite d'un matériau élastique.

13. Dispositif de mise à l'échappement d'air comprimé selon la revendication 10, caractérisé en ce que la partie d'obturation (6) est réalisée comme un bouchon.

14. Dispositif de mise à l'échappement d'air comprimé selon la revendication 10, caractérisé en ce que la partie d'obturation (6) est réalisée comme une bille.

15. Dispositif de mise à l'échappement d'air comprimé selon au moins l'une des revendications 1, 5, 6, 7, 8 et 9, caractérisé en ce que la soupape de surpression est réalisée comme un point destiné à la rupture (21, 22, 23) agencé dans la paroi du corps (1).

16. Dispositif de mise à l'échappement d'air comprimé selon la revendication 15, caractérisé en ce que le point destiné à la rupture est constitué d'une portion de paroi (22, 23) plus mince que la paroi du corps (1) et tenue par un bourrelet (21), un côté (21) du bourrelet étant prévu sur la paroi du corps (1) et l'autre côté du bourrelet étant relié à la portion de paroi plus mince (22, 23).

17. Dispositif de mise l'échappement d'air comprimé selon la revendication 15, caractérisé en ce que le point destiné à la rupture est agencé dans une paroi (10) séparant la chambre d'expansion (19) de l'espace de détente (14).

18. Dispositif de mise à l'échappement d'air comprimé selon la revendication 17, caractérisé en ce que le point destiné à la rupture est agencé dans une paroi (10) séparant la chambre d'expansion (19) de l'espace de détente (14), le point destiné à la rupture étant constitué d'une portion de paroi plus mince que la paroi (10) et tenue par un bourrelet, un côté du bourrelet étant prévu sur la paroi (10) et l'autre côté du bourrelet étant relié à la portion de paroi plus mince.

19. Dispositif de mise à l'échappement d'air comprimé selon au moins l'une des revendications 1, 5, 6, 7, 8, 9 et 10, caractérisé en ce que la soupape de surpression est formée d'une ouverture (24) prévue dans la paroi (1 ou 10) et d'une languette (25) fermant cette ouverture (24).
